Europäisches Patentamt

European Patent Office

Office européen des brevets

(19)

(11) Publication number: 0 103 733
A2

(12) EUROPEAN PATENT APPLICATION

(21) Application number: 83107861.3

(22) Date of filing: 09.08.83

(51) Int. Cl.³: C 08 L 27/24
C 08 J 9/14
//(C08L27/24, 25/04, 33/12)

(30) Priority: 18.08.82 JP 143066/82
16.09.82 JP 161369/82

(43) Date of publication of application:
28.03.84 Bulletin 84/13

(84) Designated Contracting States:
DE FR GB

(71) Applicant: Shin-Etsu Chemical Co., Ltd.
6-1, Ohtemachi 2-chome
Chiyoda-ku, Tokyo(JP)

(72) Inventor: Kiyoshi, Imada
2-201-9, Owada-cho
Imiya-shi Saitama-ken(JP)

(72) Inventor: Tsuchida, Michinori
50-3, Shitte Kamisu-cho
Kashima-gun Ibaraki-ken(JP)

(72) Inventor: Eguchi, Yoshitugu
853, Kamiyoshino
Joetsu-shi Niigata-ken(JP)

(72) Inventor: Matsumoto, Osamu
9809-7, Doai Yatabe Hazaki-cho
Kashima-gun Ibaraki-ken(JP)

(74) Representative: Jaeger, Klaus, Dr. et al,
JAEGER & PARTNER Patentanwälte Bergstrasse 48 1/2
D-8035 München-Gauting(DE)

(54) A synthetic resin foamed body and a method for the preparation thereof.

(57) The invention provides a foamed body of a chlorine-containing synthetic resin of high expansion with extremely low bulk density still retaining very fine and uniform cellular structure. Different from conventional foamed bodies of polyvinyl chloride resins, the inventive foamed body is formed of a chlorinated polyvinyl chloride resin so that the foamed body has excellent heat resistance. The method for the preparation of the foamed resin comprises: preparing a resin composition comprising a chlorinated polyvinyl chloride resin or a mixture thereof with a polyvinyl chloride resin, a foam conditioning resin, e.g. an acrylic resin or a styrene-based resin, and a cell uniformnizing agent, e.g. a heat-decomposable blowing agent or an inorganic fine powder; supplying the resin composition to the cylinder of an extruder machine; uniformly impregnating the at leat partly molten resin composition in the cylinder with a volatilizable blowing agent by pressurization; and shaping the resin composition by extruding out of the extruder with simultaneous expansion by foaming.

EP 0 103 733 A2

# A SYNTHETIC RESIN FOAMED BODY AND A METHOD FOR THE PREPARATION THEREOF

## BACKGROUND OF THE INVENTION

The present invention relates to a synthetic resin foamed body of a chlorine-containing polymer and a method for the preparation thereof. More particularly, the invention relates to a synthetic resin foamed body having excellent heat resistance and heat insulation with fine and uniform cellular structure prepared from a chlorine-containing synthetic resin.

Needless to say, foamed bodies of various synthetic plastic resins are widely used in a wide variety of applications utilizing their unique characteristics of outstanding lightweight as well as heat insulation and cushioning performance. Among such plastic resin foamed bodies, the production and consumption of those prepared from a vinyl chloride-based synthetic resin are rapidly growing by virtue of their flame retardancy inherent to the chlorine-containing polymers in addition to their relative inexpensiveness although the heat resistance of polyvinyl chloride resins is not high enough to ensure the use of the foamed bodies thereof at elevated temperatures.

Meanwhile, foamed bodies of a vinyl chloride-based synthetic resin are manufactured in the prior art in several different ways. For example, (1) a polyvinyl chloride resin is admixed uniformly with a so-called heat-decomposable blowing agent which is a compound decomposable by heating with formation of a gaseous decomposition product and the resin composition is heated and shaped with simultaneous foaming by the decomposition of the blowing agent or (2) a so-called plastisol which is a paste-like mixture of a polyvinyl chloride resin and a plasticizer is shaped with mechanical foaming or, alternatively, the plastisol is admixed with a heat-decomposable blowing agent and the composition is shaped by heating with simultaneous foaming by the decomposition of the blowing agent. The process for shaping such foamed bodies is also diversified. For example, (3) a composition composed of a polyvinyl chloride resin and a decomposable blowing agent is shaped by heating with simultaneous foaming by the techniques of extrusion molding or injection molding, (4) such a resin composition is shaped into a form by rolling or other means at a temperature lower than the decomposition temperature of the decomposable blowing agent and the shaped body is then heated to effect expansion by foaming at a temperature higher than the decomposition temperature of the blowing agent or (5) such a resin composition with optional impregnation with a volatilizable organic blowing agent, an organic solvent capable of swelling the polymer and a softening agent filling a metal mold is heated under pressure to effect expansion by foaming.

Conventional foamed bodies of a vinyl chloride-based resin, however, have several problems and disadvantages. For example, it is a rather difficult matter to obtain a fine and uniform cellular structure with such a synthetic resin especially when a foamed body of very small bulk density is desired with a remarkably increased ratio of expansion by foaming. In addition, foamed bodies of polyvinyl chloride resins have poor heat resistance and the foamed body undergoes changes in dimensions and deformation of form already at a temperature of 60 °C or higher so that their application as a heat insulating material is limited to the cases and places where the temperature never increases over 60 °C.

Some of the inventors have previously proposed an improved method for the preparation of a foamed body of a vinyl chloride-based synthetic resin (see Japanese Patent Kokai 55-149328) according to which a polyvinyl chloride resin is admixed with a nucleating agent such as talc, an acrylic resin and a decomposable blowing agent such as an azodicarbonamide compound and the like along with a heat stabilizer and the resin composition is supplied to an extruder machine in which the heated and molten resin composition is impregnated by pressurization with an organic solvent-type blowing agent boiling at 90 °C or below under atmospheric pressure, such as propane, butane, pentane, methyl chloride, trifluorochloromethane, dichlorotetrafluoroethane and the like, followed by extrusion molding with simultaneous expansion by foaming. This method is indeed effective in improving the fineness and uniformity of the cellular structure of the foamed body to give a possibility of obtaining a foamed body of high expansion with a remarkably small bulk density. Unfortunately, this method has nothing to contribute to the improvement of the heat resistance of the foamed body so that it has been eagerly desired to provide a foamed body and a method for the preparation thereof improved in this respect.

## SUMMARY OF THE INVENTION

Thus, an object of the present invention is to provide a foamed body of a chlorine-containing synthetic plastic resin with improved heat resistance retaining the advantages of the above described previously proposed method in respect of the fineness and uniformity of the cellular structure of the body.

Another object of the present invention is to provide a novel method for the preparation of such an improved foamed body of a chlorine-containing synthetic plastic resin.

The foamed body of a chlorine-containing synthetic plastic resin provided by the present invention is a foamed body having a cellular structure formed of a resin composition comprising:

(a) 100 parts by weight of a chlorinated polyvinyl chloride resin containing from 60 to 75 % by weight of chlorine or a resin mixture thereof with a polyvinyl chloride resin in an amount not exceeding 90 % by weight of the resin mixture, and

(b) from 0.5 to 30 parts by weight of a foam conditioning resin selected from the group consisting of acrylic resins and styrene-based resins.

The above defined foamed body of the invention has a bulk density of 0.1 g/ml or smaller without particularly adverse effects on the fineness and uniformity of the cellular structure in which the content of the closed cells is at least 70 % and also has a temperature of heat resistance of 70 °C or higher.

The method of the present invention for the preparation of the above defined foamed body comprises the steps of:

(i) preparing a resin composition comprising

(a) 100 parts by weight of a chlorinated polyvinyl chloride resin containing from 60 to 75 % by weight of chlorine or a resin mixture thereof with a polyvinyl chloride resin in an amount not exceeding 90 % by weight of the resin mixture,

(b) from 0.5 to 30 parts by weight of a foam conditioning resin selected from the group consisting of acrylic resins and styrene-based resins, and

(c) at least 0.01 part by weight of a cell uniformizing agent selected from the group consisting of heat-decomposable blowing agents and high-melting finely divided powders;

(ii) supplying the resin composition to an extruder machine;

(iii) impregnating and admixing the resin composition in the extruder machine under pressurization with a volatilizable organic blowing agent boiling at 90 °C or below under atmospheric pressure, and

(iv) extruding and shaping the resin composition out of the extruder machine with simultaneous expansion by foaming.

## DETAILED DESCRIPTION OF THE PREFERRED EMBODIMENTS

As is understood from the above description, the base material of the inventive foamed body is the component (a) which is a chlorinated polyvinyl chloride resin or a mixture thereof with a polyvinyl chloride resin. The chlorinated polyvinyl chloride resins are well known in the art and prepared by chlorinating a polyvinyl chloride resin by several known methods including the method of photochlorination under irradiation with ultraviolet light and a method of liquid-phase chlorination in solution in the presence of a chlorinating agent. The extent of chlorination in this case should preferably be limited in such a range that the chlorine content of the resultant chlorinated polyvinyl chloride resin is from 60 to 75 % by weight. When the chlorine content of the chlorinated polyvinyl chloride resin is too small, no sufficient improvement can be obtained in the heat resistance of the foamed body of the resin composition while an excessively high chlorine content is undesirable due to the difficulty encountered in the shaping works by extrusion which should be performed at a higher temperature as the chlorine content is increased eventually to cause thermal degradation of the resin composition.

The component (a) as the base material of the inventive foamed body may be a resin mixture of the above mentioned chlorinated polyvinyl chloride resin and a (unchlorinated) polyvinyl chloride resin. The polyvinyl chloride resin suitable for use is not limited to those of particular types including homopolymers of vinyl chloride and copolymers of vinyl chloride with one or more of comonomers provided that the major monomeric constituent, e.g. 50 % by weight or more, is vinyl chloride. The comonomers to be copolymerized with vinyl chloride to form the copolymers including graft copolymers are exemplified by vinyl acetate, vinylidene chloride, acrylic and methacrylic acids and esters thereof, acrylonitrile, methacrylonitrile, maleic acid and anhydride or esters thereof, fumaric acid and esters thereof, olefins such as ethylene and propylene, alkyl vinyl ethers and the like. It is of course optional that two kinds or more of these vinyl chloride-based polymers are used in combination.

When the chlorinated polyvinyl chloride resin is used in combination with the above mentioned unchlorinated vinyl chloride-based resin, the amount of the latter should be 90 % by weight or smaller of the total amount of the resin mixture since substantially no improving effect can be obtained in the heat resistance of the foamed body prepared from a resin mixture containing the chlorinated polyvinyl chloride resin in so small an amount.

The second component, i.e. component (b), is a foam conditioning resin which is selected from the group consisting of acrylic resins and styrene-based resins. This component plays a very important role in several ways such as acceleration or control of the melting of the base resin, i.e. component (a), and increase or control of the viscosity of the molten base resin to prevent coalescence of the foams or shrinkage of the once formed foam cells exhibiting an effect of confining the blowing gases within the cellular structure of the resin composition to ensure fineness and uniformity of the structure of high expansion. This effect is further enhanced when the foam conditioning resin as the component (b) is used in combination with the cell uniformizing agent as the component (c) described later to give a foamed body of high expansion having a very fine and uniform cellular structure with good appearance without shrinkage at the extrusion.

The foam conditioning resin should preferably have a degree of polymerization as high as possible in order to exhibit the desired effects of accelerating the uniform melting of the base resin, increasing the melt viscosity of the base resin to impart rubbery elasticity thereto and improving the tensile strength and elongation of the base resin at an elevated temperature. For example, the resin should have a reduced viscosity of at least 3.0 dl/g at 20 °C as measured in a chloroform solution of 0.1 g/100 ml concentration. The degree of polymerization of the foam conditioning resin should preferably be larger than that of the chlorine-containing base resin and the resin should have good compatibility with the base resin.

The acrylic resins as a class of the foam conditioning resins include polymers of methyl methacrylate and the copolymers mainly composed of methyl methacrylate, e.g. containing 50 % by weight or more thereof, with other acrylic monomers such as esters of acrylic acid and the like copolymerizable therewith. The above mentioned esters of acrylic acid are exemplified by methyl, ethyl, n-butyl, isobutyl and 2-ethylhexyl acrylates and the comonomers copolymerizable therewith are exemplified by styrene, unsaturated nitriles, vinyl esters and esters of methacrylic acid other than methyl methacrylate such as ethyl, n-butyl and 2-ethylhexyl methacrylates.

It is well known in the art of polymerization that the degree of polymerization or the reduced viscosity of the acrylic resin can be controlled by modifying some of the conditions in the polymerization reaction such as the polymerization temperature, the amount of the polymerization initiator and the amount of the chain transfer agent. Usually, polymers of larger molecular weight can be obtained by decreasing the values of these parameters.

It has been noted that, in addition to the above described advantages, the use of an acrylic resin prepared by the emulsion polymerization has an additional effect to improve the smoothness in the feeding of the resin composition to the extruder machine preventing blockage at the feeding port of the extruder machine and contributing to the stability in the feeding rate of the resin composition to the machine which can accordingly be run at constant pressure, torque and rate of extrusion to produce uniform products.

The styrene-based resins as the other class of the foam conditioning resins are preferably copolymers mainly composed, e.g. 50 % by weight or more, of styrene with acrylonitrile and/or a monomer copolymerizable therewith. The above mentioned monomers copolymerizable with styrene or acrylonitrile are exemplified by esters of acrylic acid such as methyl, ethyl, n-butyl, isobutyl and 2-ethylhexyl acrylates, esters of methacrylic acid such as methyl, ethyl, n-butyl and 2-ethylhexyl methacrylates, maleic and fumaric acids and esters thereof, maleic anhydride and the like.

It is preferable that the chlorine-containing base resins having a larger degree of polymerization should be combined with the styrene-based resin having a correspondingly higher degree of polymerization.

Any styrene-based resins prepared in the conventional polymerization methods can be used in the invention although it is preferable that a styrene-based resin prepared by the emulsion polymerization is used in view of the good dispersibility of such a resin in the resin composition and the relatively high degree of polymerization thereof prepared by the method.

The amount of the foam conditioning resin as the component (b) should preferably be in the range from 0.5 to 30 parts by weight or, more preferably, from 3 to 20 parts by weight per 100 parts by weight of the base resin or resin mixture as the component (a). This is because the above described advantageous effects cannot be obtained with this component in an amount smaller than 0.5 part by weight while no particular additional effects can be obtained by increasing the amount over 30 parts by weight with rather disadvantageous effects of decreasing the flame retardancy and the like favorable properties inherent to the chlorine-containing base resins. Meanwhile, it is of course optional that the acrylic resin and the styrene-based resin are used in combination according to need.

The third component, i.e. component (c), is the cell uniformizing agent which serves to prepare the nuclei for the growth of the cells and to ensure fineness and uniformity of the cellular structure in the expansion of the resin composition by foaming. The cell uniformizing agent is selected from two classes of materials, those of the first class being heat-decomposable blowing agents and those of the second class being high-melting finely divided powders.

The heat-decomposable blowing agent as the cell uniformizing agent should preferably have a decomposition temperature to produce a gaseous decomposition product lower than the temperature at which the resin composition is shaped by extrusion. The heat-decomposable blowing agent satisfying such a requirement is exemplified by azoic compounds such as azodicarbonamide, azobisisobutyronitrile, diazoaminobenzene, diethylazo dicarboxylate, diisopropylazo dicarboxylate and the like, nitroso compounds such as N,N'-dinitroso pentamethylene tetramine, N,N'-dimethyl-N,N'-dinitroso terephthalamide and the like and sulfonyl hydrazide compounds such as benzene sulfonyl hydrazide, toluene sulfonyl hydrazide, 3,3'-disulfonehydrazido phenylsulfone, toluene disulfonyl hydrazone, thiobis(benzenesulfonyl hydrazide), toluene sulfonyl azide, toluene sulfonyl semicarbazide, 4,4'-hydroxybis(benzene sulfonyl hydrazide) and the like as well as sodium hydrogen carbonate and the like inorganic blowing agents.

It is preferable that the above named heat-decomposable blowing agent is used in combination with a suitable decomposition aid such as oxalic acid, citric acid, tartaric acid, urea, zinc compounds, copper compounds and the like to modify the decomposition temperature of the blowing agent so that the blowing agent is decomposed to produce the gaseous decomposition product at a temperature below the temperature at which shaping of the resin composition is performed by extrusion.

The high-melting finely divided powder as the second class of the cell uniformizing agent is not particularly limitative and any materials having a melting point higher than the melting point of the chlorine-containing base resin or resin mixture can be used including so-called inorganic fillers in general such as calcium carbonate, talc, mica, sericite, barium sulfate, silica, fumed silica, titanium dioxide, clay, aluminum oxide, bentonite, diatomaceous earth, carbon black and the like as well as pigments and heat stabilizers and flame retardants having a high melting point. It is of course optional that two or more of the above described cell uniformizing agents belonging to the same class or different classes may be used in combination according to need.

The particle size distribution of the cell uniformizing agent should preferably be as fine as possible to have a particle diameter of 30 $\mu$m or smaller or, more preferably, 10 $\mu$m or smaller as dispersed in the resin composition to ensure fineness and uniformity of the cellular structure of the resultant foamed body. When the particle diameter of the cell uniformizing agent exceeds 30 $\mu$m, the resin composition has poor flowability in shaping so that the surface of the foamed body is less glossy with ruggedness by foaming in addition to the decreased uniformity of the cellular structure.

The amount of the cell uniformizing agent should be at least 0.01 part by weight or, preferably, at least 0.05 part by weight per 100 parts by weight of the chlorine-containing base resin or resin mixture as the component (a). When the amount is smaller than 0.01 part by weight, the cell uniformizing effect can hardly be exhibited so that the resultant foamed body may have decreased fineness and poor uniformity in the cellular structure. Specifically, the heat-decomposable blowing agent as the cell uniformizing agent should be used in an amount not exceeding 5 parts by weight per 100 parts by weight of the component (a) since larger amounts thereof may have no particular additional effects. On the other hand, the high-melting finely divided powder, e.g. inorganic fillers, as the cell uniformizing agent is used usually in an amount not exceeding 20 parts by weight per 100 parts by weight of the component (a) since the cell uniformizing effect obtained thereby reaches the ceiling approximately with this amount although it is optional to use the high-melting finely divided powder in an amount in excess of 20 parts by weight when a role is expected and desired to be played thereby as a reinforcing filler, extender, flame retardant and the like.

It is further optional that, in addition to the above described components (a), (b) and (c), the resin composition comprises any other additives conventionally admixed with polyvinyl chloride resins or chlorine-containing synthetic plastic resins although the amounts thereof should of course be limited to the ranges not to adversely affect the properties of the resultant foamed bodies.

Turning now to the procedure for the preparation of the inventive foamed body, the resin composition comprising the components (a) to (c) and other optional additives is supplied to an extruder machine in which the resin composition is heated and mixed while being pressurized with a volatilizable organic blowing agent boiling at 90 °C or below under atmospheric pressure so as to be uniformly impregnated with the volatilizable blowing agent followed by extrusion out of the extruder machine to be shaped into a desired form with simultaneous expansion of the resin composition by foaming and to give a foamed body of high expansion having a fine and uniform cellular structure in a continuous process with outstanding inexpensiveness.

To describe it in more detail, the inventive method provides a foamed body of extremely high expansion having a bulk density of 0.1 g/ml or, in particular, 0.06 g/ml or smaller retaining the high fineness and uniformity of the cellular structure in which the content of the closed cells can exceed 70 % or, in some cases, 75 %. Owing to the inherent properties of the base resin or resin mixture, the foamed body is highly heat-resistant and the temperature of heat resistance thereof exceeds 75 °C or, in some cases, 80 °C. Therefore, the foamed body of the invention can be used satisfactorily as a heat insulating material to be used in such a place where conventional foamed bodies of vinyl chloride-based resins cannot be used due to the limitation by the temperature elevation. It may be too much to say that the inventive foamed body has still better flame retardancy than those of conventional polyvinyl chloride resins as a consequence of the increased chlorine content.

The volatilizable organic blowing agent having a boiling point of 90 °C or below under atmospheric pressure is preferably an aliphatic hydrocarbon compound or a halogenated aliphatic hydrocarbon compound exemplified by propane, butane, isobutane, pentane, neopentane, n-hexane, isohexane, n-heptane, petroleum ether, methyl chloride, methylene chloride, chloroform, carbon tetrachloride, ethyl chloride, ethylidene chloride, trichloroethylene, 1,2-dichloroethane, trichlorofluoromethane, dichlorodifluoromethane,

bromotrifluoromethane, tetrafluoromethane, dichlorofluoro-
methane, chlorotrifluoromethane, trifluoromethane, trichlo-
rotrifluoroethane, dichlorotetrafluoroethane, dibromotetra-
fluoroethane, chloropentafluoroethane, hexafluoroethane,
chlorodifluoroethane, difluoroethane and the like. These
compounds may be used either singly or as a combination of
two kinds or more according to need. It is sometimes advantageous that these halogen-substituted or unsubstituted aliphatic hydrocarbon compounds are used in combination with
other solvents having miscibility with the chlorine-containing resin such as aromatic hydrocarbon compounds, halogenated aromatic hydrocarbon compounds, ester compounds, ketone
compounds and the like in order to further improve the uniformity of the dispersion of the volatilizable organic blowing agent throughout the resin composition when a foamed
body of high expansion is desired.

The amount of the volatilizable organic blowing agent
to impregnate the resin composition is usually in the range
from 1 to 30 parts by weight per 100 parts by weight of the
resin composition and the amount should be suitably controlled depending on the bulk density of the desired foamed
body.

The resin composition prepared by uniformly blending
the components (a) to (c) and other optional additives by
use of a suitable blending machine such as a supermixer is supplied to an extruder machine at a controlled rate and heated and at least partly melted in the cylinder of the extruder. The volatilizable organic blowing agent is introduced into the cylinder by pressurization at an intermediate position also in a controlled rate and mixed with and dispersed uniformly in the at least partly molten resin composition in the melting and mixing zone of the cylinder. The resin composition thus impregnated with the volatilizable organic blowing agent is then uniformly cooled to a temperature suitable for expansion by foaming followed by extrusion out of the extruder under atmospheric pressure or reduced pressure to effect shaping with simultaneous expansion by foaming.

The impreganation of the resin composition with the volatilizable organic blowing agent by pressurization may be performed at any stage in the cylinder provided that no back flow of the blowing agent toward the feeding port of the resin composition takes place to disturb the constant and stable feeding rate of the resin composition into the extruder machine although the preferable stage is where the resin composition heated in the cylinder of the extruder is in an at least partly molten state. A uniform dispersion of the volatilizable organic blowing agent in the resin composition is readily achieved when impregnation therewith is performed with a partly or completely molten resin composition so that the resultant foamed body of high expansion may have a fine and uniform cellular structure.

The above described method of the present invention by extrusion is applicable for the continuous production of a foamed body of high expansion having a very fine and uniform cellular structure in the form of a plate, sheet, rod, tube and the like suitable for extrusion molding.

Following are the examples to illustrate the foamed bodies of the chlorine-containing resin compositon and the method for the preparation thereof according to the present invention.  In the following examples, the "parts" for the amount of formulation of the components always refers to "parts by weight".

Example 1. (Experiments No. 1 to No. 13)

A resin composition was prepared by uniformly blending in a Henschel mixer 100 parts of a chlorinated polyvinyl chloride resin (hereinafter referred to as chlorinated PVC) having an average degree of polymerization $\bar{P}$ and chlorine content as indicated in Table 1 below, 4 parts of a lead-containing stabilizer, 1 part of calcium stearate, a cell uniformizing agent of the kind indicated in the same table and defined below in an amount also indicated in the table and a foam conditioning resin, i.e. an acrylic or styrene-based resin, indicated in the table and defined below in an amount also indicated in the table.

Cell uniformizing agent

Talc:    a product by Tsuchiya Kaolin Co. having an average particle diameter of 1 to 3 $\mu$m

Calcium carbonate:  Hakuenka O, a product by Shiraishi Calcium Co. having an average particle diameter of 0.02 to 0.03 $\mu$m (shown in the table as $CaCO_3$)

Azodicarbonamide compound:  Celmic 133, a product by Sankyo Kasei Co. having a decomposition temperature in the range of 130 to 180 °C

(shown in the table as CM)

p-Toluenesulfonyl hydrazide: decomposition temperature 110 °C (shown in the table as PTS)


Foam conditioning resin

E-1:    a copolymer composed of 90 % by weight of methyl methacrylate and 10 % by weight of butyl acrylate having a reduced viscosity of 9.5 dl/g

S-1:    a copolymer composed of 70 % by weight of styrene and 10 % by weight of acrylonitrile having a reduced viscosity of 12 dl/g


The above prepared resin composition was supplied to the first of the two extrusion molding machines connected in tandem as described below and shaped into a foamed body by extrusion with simultaneous expansion by foaming and the foamed body was examined for the bulk density in g/ml, condition of the cellular structure, content of the closed cells in % and the temperature of heat resistance in $^\circ$C to give the results shown in Table 1.

Construction of the extruder system

The first-stage extruder machine had a cylinder having an inner diameter of 20 mm with L/D = 25 provided with an opening for introduction of the volatilizable organic blowing agent at a position 300 mm ahead from the feeding port for the resin composition below the hopper, through which the volatilizable blowing agent could be pressurized into the cylinder by means of a double-plunger pump.

The second-stage extruder machine connected to the end of the first-stage extruder had a cylinder of 25 mm diameter with L/M = 28 equipped at the end with a circular die having a diameter of 10 mm and a rand length of 100 mm.

Conditions for the operation of the extruder machines

(1) The first-stage extruder machine was operated at a velocity of 60 r.p.m. and the temperature of the cylinder was kept at $C_1$ = 140 to 160 $^\circ$C, $C_2$ = 160 to 180 $^\circ$C and $C_3$ = 170 to 190 $^\circ$C at a position near the feeding port, an intermediate position and a position near the end, respectively.

(2) The second-stage extruder machine was operated at a velocity of 25 to 30 r.p.m. and the temperature of the cylinder was kept at $C_1$ = 140 to 160 $^\circ$C, $C_2$ = 120 to

140 °C and C$_3$ = 110 to 130 °C while the extrusion die
was kept at 120 to 140 °C.

(3)    A mixture of methyl chloride and trichlorofluoromethane
in an equal amount was introduced into the cylinder as
a blowing agent in such a rate that the resin composition was impregnated with 13 to 16 % by weight of the
blowing agent by use of a double-plunger pump.

Methods and criteria for the evaluation of the foamed body

(1)    The cellular structure of the foamed body was visually
examined and graded in A, B and C according to the
following criteria.

A:    The cellular structure was fine and uniform with a
cell diameter of 300 μm or smaller.

B:    The cellular structure was uniform but having a
somewhat coarser cell diameter of 300 to 1000 μm.

C:    The uniformity of the cellular structure was poor
with an average cell diameter of 1000 μm or
coarser.

(2)    The content of closed cells in % was determined with a
test specimen of 20 mm x 20 mm x 40 mm dimensions by
the air-substitution method in an air-comparator densimeter Model 930 manufactured by Beckman Co. which gave
the volume of the body occupied by the closed cells
and the value was calculated from the following
equation

content of closed cells, % = $(\Delta V - w/\alpha)/V \times 100$,

in which V is the bulk volume of the foamed body in ml, w is the weight of the body in g, $\Delta$V is the volume in ml as determined in the above mentioned air-comparator densimeter, and $\alpha$ is the true density of the resin composition forming the foamed body in g/ml.

(3) The temperature of heat resistance was determined by keeping rod-like test bodies of each 20 mm x 20 mm x 100 mm dimensions for 24 hours each at a temperature of 60 $^{\circ}$C to 100 $^{\circ}$C with a 5 $^{\circ}$C interval followed by the measurement of the changes in dimensions to give an average value for three test bodies kept at the same temperature taking the highest heating temperature at which the dimensional changes did not exceed 1 % as the temperature of heat resistance.

Example 2. (Experiments No. 13 to No. 22)

A resin composition was prepared by uniformly blending in a Henschel mixer 100 parts of a chlorinated polyvinyl chloride resin having an average degree of polymerization of 670 and containing 67 % by weight of chlorine, 2 parts of a tin-containing powdery stabilizer, 1 part of calcium stearate and the cell uniformizing agents and foam conditioning resins indicated in Table 2 below for the kinds and amounts. The extrusion shaping of the composition with foaming was performed in the same manner as in Example 1 excepting the kind and amount of the volatilizable blowing agent as indicated in the table as well as the kind of the foam conditioning resin. In the table, the amount of the blowing agent in % was based on the amount of the resin composition and the abbreviations for the blowing agents denote as follows.

TCFM:  trichlorofluoromethane

DCFE:  dichlorotetrafluoroethane

ISO :  isooctane

DCFM:  dichlorofluoromethane

MNC :  methylene chloride

MC  :  methyl chloride

BN  :  butane

CF  :  -chloroform

TN  :  toluene

Following two resins were used as the foam conditioning resin in addition to E-1 and S-1 used in Example 1.

E-2:  a copolymer composed of 80 % by weight of methyl methacrylate and 20 % by weight of ethyl acrylate having a reduced viscosity of 2 dl/g

S-2:  a copolymer composed of 70 % by weight of styrene and 30 % by weight of acrylonitrile having a reduced viscosity of 2 dl/g

The results of the property evaluation of the foamed bodies are shown in Table 2.

Example 3. (Experiments No. 23 to No. 34)

A resin composition was prepared by uniformly blending in a Henschel mixer 100 parts of a chlorinated polyvinyl chloride resin having an averge degree of polymerization of 760 and containing 66 % by weight of chlorine, 4 parts of a lead-containing stabilizer, 1 part of calcium stearate, 1 part of talc and either one or two of the foam conditioning resins E-3 to E-6 and S-3 to S-5 shown below in an amount indicated in Table 3 to follow.

E-3: a polymer of methyl methacrylate having a reduced viscosity of 4.0 dl/g

E-4: a copolymer composed of 70 % by weight of methyl methacrylate and 30 % by weight of butyl acrylate having a reduced viscosity of 8.5 dl/g

E-5: a copolymer composed of 80 % by weight of methyl methacrylate and 20 % by weight of butyl acrylate having a reduced viscosity of 13.5 dl/g

E-6: a copolymer composed of 70 % by weight of methyl methacrylate, 10 % by weight of butyl acrylate and 20 % by weight of butyl methacrylate having a reduced viscosity of 10.5 dl/g

S-3: a copolymer composed of 70 % by weight of styrene and 30 % by weight of acrylonitrile having a reduced viscosity of 4.5 dl/g

S-4: a copolymer composed of 70 % by weight of styrene and 30 % by weight of acrylonitrile having a reduced viscosity of 10.0 dl/g

S-5:   a copolymer composed of 72 % by weight of styrene and 28 % by weight of acrylonitrile having a reduced viscosity of 14.6 dl/g

The above prepared resin composition was supplied to the first of a set of the two extruder machines connected in tandem. The first-stage extruder machine had a cylinder having an inner diameter of 50 mm with L/D = 30 which was provided with an opening for introducing the volatilizable blowing agent at a position 100 cm ahead from the feeding port of the resin composition below the hopper and the blowing agent could be inroduced therethrough into the cylinder by pressurizing with a metering pump. The second-stage extruder machine connected to the end of the first-stage extruder had a cylinder of 50 mm inner diameter with L/D = 30 equipped at the end with a die for shaping a plate with an aperture of 5 mm x 400 mm dimensions.

The volatilizable blowing agent was a 80:20 by weight mixture of trichlorofluoromethane and methyl chloride and introduced into the cylinder of the first-stage extruder through the opening at such a rate that the resin composition was impregnated with 15 % by weight of the blowing agent by use of a metering pump. The temperature of the cylinder of the first-stage extruder was ketp at $C_1 = 150$ °C, $C_2 = 180$ °C, $C_3 = 190$ °C and $C_4 = 180$ °C from the feeding port to the other end while the second-stage extruder was controlled to have the temperature distribution $T_1$, $T_2$ and $T_3$ of the cylinder from the end connected to the first-stage extruder to the other end of the cylinder as well as the die temperature $D_1$ and the temperature of the resin composition $T_4$ at the extruder head just before the die all indicated in Table 3.

The extruder system was run with a revolution of 60 r.p.m. in the first-stage extruder and at a feeding rate of 40 to 45 kg/hour of the resin composition to continuously produce a plate-like foamed body of which the bulk density in g/ml, cellular structure, content of closed cells in % and temperature of heat resistance were examined to give the results shown in Table 3 in the same manner as in Example 1. Meanwhile, the temperature of heat resistance was determined with test bodies each having 20 mm x 100 mm x 100 mm dimensions.

Example 4. (Experiments No. 35 to No. 47)

The experimental procedure was just the same as in Example 1 except that the chlorinated polyvinyl chloride resin was replaced with the same amount of a mixture of a polyvinyl chloride resin (referred to as PVC) and a chlorinated polyvinyl chloride resin (referred to as chlorinated PVC). Table 4 below shows the average degree of polymerization $\bar{P}$ and amount of each of these resins and the chlorine content of the latter. The formulations of the resin compositions and the results of the evaluation of the foamed bodies are summarized in Table 4.

Example 5. (Experiments No. 48 to No. 57)

The experimental procedure was just the same as in Example 2 except that the chlorinated PVC in Example 2 was replaced with a mixture of 50 parts of a polyvinyl chloride resin having an average degree of polymerization of 700 (TK 700, a product by Shin-Etsu Chemical Co.) and 50 parts of a chlorinated PVC having an average degree of polymerization of 670 and containing 67 % by weight of chlorine. The formulation in each of the experiments and the results of the evaluation of the foamed body are summarized in Table 5 below.

Example 6. (Experiments No. 58 to No. 67)

The experimental procedure was just the same as in Example 3 except that the chlorinated PVC in Example 3 was replaced with a mixture of 70 parts of a polyvinyl chloride resin having an average degree of polymerization of 810 (TK 800, a product by Shin-Etsu Chemical Co.) and 30 parts of a chlorinated PVC having an average degree of polymerization of 560 and containing 68 % by weight of chlorine. The formulation in each of the experiments and the results of the evaluation of the foamed bodies are summarized in Table 6 below.

| Experiment No. | | 1 | 2 | 3 | 4 | 5 | 6 | 7 | 8[*] | 9 | 10 | 11 | 12[*] |
|---|---|---|---|---|---|---|---|---|---|---|---|---|---|
| Chlorinated PVC | Cl content, % | 59 | 64 | 68 | 69.5 | 66 | 68 | 68 | 57 | 60 | 64 | 64 | 64 |
| | $\bar{P}$ | 900 | 860 | 560 | 470 | 760 | 560 | 560 | 1000 | 900 | 860 | 860 | 860 |
| Cell-uniformizing agent (parts) | | Talc (2.0) | Talc (1.0) CM (0.3) | Talc (0.03) PTS (1.0) | Talc (3.0) | CM (1.0) | $CaCO_3$ (10) | $CaCO_3$ (20) | Talc (2.0) | None | None | None | PTS (7) |
| Foam-conditioning resin (parts) | | E-1 (10) | S-1 (10) | E-1 (8) | E-1 (5) | E-1 (6) S-1 (4) | E-1 (6) S-1 (6) | S-1 (10) | None | E-1 (6) | None | S-1 (0.3) | E-1 (3) |
| Bulk density of foamed body, g/ml | | 0.035 | 0.030 | 0.027 | 0.030 | 0.029 | 0.028 | 0.031 | 0.30 | 0.10 | 0.15 | 0.11 | 0.14 |
| Cellular structure | | A | A | A | A | A | A | A | B | C | C | C | A |
| Content of closed cells, % | | 85 | 90 | 90 | 85 | 86 | 90 | 83 | 5 | 30 | 10 | 23 | 13 |
| Temperature of heat resistance, °C | | 70 | 90 | 100 | 100 | 90 | 100 | 100 | 60 | 60 | 80 | 80 | 80 |

[*] Foams broken remarkably

Table 2

| Experiment No. | | 13 | 14 | 15 | 16 | 17 | 18 | 19 | 20 | 21 | 22 |
|---|---|---|---|---|---|---|---|---|---|---|---|
| Cell-uniformizing agent (parts) | | Talc (3) | Talc (0.05) | Talc (1.0) | Talc (5.0) | CM (0.5) | $CaCO_3$ (5) | Talc (3) PTS (0.5) | Talc (1) | Talc (3) | $CaCO_3$ (10) |
| Foam-conditioning resin (parts) | | E-1 (10) | E-1 (3) | S-1 (5) | S-1 (10) E-1 (10) | S-1 (28) | E-1 (25) | E-1 (10) | E-1 (3) | E-2 (5) | E-2 (5) |
| Gaseous blowing agent | Composition (weight ratio) | TCFM+ MNC (70/30) | DCFM + MC (50/50) | DCFM + MC (50/50) | DCFM + MC (50/50) | BN+MC (50/50) | DCFM + CF (90/10) | TCFM +MC+TN (70/20/10) | ISO (100) | TCFE + TN (80/20) | TCFE + ISO (50/50) |
| | Amount introduced, % by weight | 13 | 8 | 10 | 14 | 14 | 10 | 15 | 10 | 10 | 10 |
| Bulk density of foamed body, g/ml | | 0.028 | 0.045 | 0.035 | 0.026 | 0.026 | 0.039 | 0.026 | 0.13 | 0.10 | 0.15 |
| Cellular structure | | A | B | A | A | A | A | A | C | C | C |
| Content of closed cells, % | | 85 | 83 | 88 | 91 | 90 | 83 | 88 | 28 | 20 | 10 |
| Temperature of heat resistance, °C | | 90 | 100 | 90 | 90 | 90 | 90 | 90 | 90 | 80 | 90 |
| Foam shrinkage at extrusion | | No | No | No | No | No | No | No | Yes | Yes | Yes |

| Experiment No. | | 23 | 24 | 25 | 26 | 27 | 28 | 29 | 30 | 31 | 32 | 33 | 34*) |
|---|---|---|---|---|---|---|---|---|---|---|---|---|---|
| Foam-condition-ing resin (parts) | | E-3 (15) | E-4 (8) | E-5 (3) | E-6 (8) | S-3 (15) | S-4 (8) | S-5 (5) E-6 (2) | S-5 (5) E-3 (5) | E-3 (5) | S-3 (5) | E-4 (0.5) | S-4 (5) |
| Temperature of second-stage cylinder, °C | $T_1$ | 140 | 140 | 135 | 135 | 136 | 140 | 140 | 140 | 150 | 150 | 145 | 120 |
| | $T_2$ | 125 | 125 | 126 | 126 | 125 | 130 | 130 | 133 | 140 | 140 | 135 | 110 |
| | $T_3$ | 115 | 115 | 115 | 114 | 116 | 121 | 120 | 125 | 135 | 135 | 130 | 100 |
| Die temperature $D_1$, °C | | 130 | 130 | 130 | 130 | 131 | 130 | 131 | 130 | 140 | 130 | 135 | 120 |
| Resin temperature $T_4$, °C | | 138 | 137 | 135 | 136 | 137 | 140 | 141 | 143 | 150 | 149 | 146 | 120 |
| Bulk density of foamed body, g/ml | | 0.029 | 0.028 | 0.029 | 0.030 | 0.030 | 0.029 | 0.030 | 0.028 | 0.085 | 0.091 | 0.095 | 0.088 |
| Cellular structure | | A | A | A | A | A | A | A | A | B | B | B | B |
| Content of closed cells,% | | 88 | 93 | 88 | 95 | 85 | 92 | 88 | 89 | 7 | 9 | 20 | 25 |
| Temperature of heat resistance, °C | | 90 | 90 | 100 | 90 | 90 | 100 | 100 | 100 | 100 | 100 | 100 | 90 |

*) Large torque at the second-stage extruder

| Experiment No. | | 35 | 36 | 37 | 38 | 39 | 40 | 41 | 42 | 43 | 44[*] | 45 | 46[*] | 47[*] |
|---|---|---|---|---|---|---|---|---|---|---|---|---|---|---|
| PVC | $\bar{P}$ | 700 | 700 | 700 | 700 | 700 | 1000 | 1000 | 700 | 700 | 700 | 1000 | 1000 | 1000 |
| | Parts | 90 | 70 | 50 | 30 | 10 | 70 | 30 | 100 | 5 | 70 | 50 | 50 | 80 |
| Chlorinated PVC | Cl Content, % | 70 | 68 | 68 | 68 | 68 | 66 | 64 | ...... | 60 | 64 | 64 | 64 | 68 |
| | $\bar{P}$ | 470 | 560 | 560 | 560 | 560 | 760 | 860 | | 900 | 860 | 860 | 860 | 560 |
| | Parts | 10 | 30 | 50 | 70 | 90 | 30 | 70 | 0 | 95 | 30 | 50 | 50 | 20 |
| Cell-uniformizing agent (parts) | | Talc (2.0) | Talc (1.0) CM (0.3) | Talc (0.03) PTS (1.0) | Talc (3.0) | CM (1.0) | $CaCO_3$ (10) | $CaCO_3$ (15) | Talc (1.0) | None | None | None | PTS (7) | Talc (3) |
| Foam-conditioning resin (parts) | | E-1 (10) | S-1 (10) | E-1 (8) | E-1 (8) | E-1 (4) S-1 (4) | S-1 (10) | E-1 (7) S-1 (7) | E-1 (10) | E-1 (6) | None | S-1 (0.3) | E-1 (3) | None |
| Bulk density of foamed body, g/ml | | 0.027 | 0.027 | 0.029 | 0.030 | 0.031 | 0.029 | 0.030 | 0.030 | 0.10 | 0.15 | 0.12 | 0.14 | 0.10 |
| Cellular structure | | A | A | A | A | A | A | A | A | C | C | C | A | A |
| Content of closed cells, % | | 95 | 93 | 96 | 94 | 93 | 95 | 94 | 90 | 35 | 10 | 31 | 16 | 13 |
| Temperature of heat resistance, °C | | 70 | 85 | 90 | 95 | 100 | 80 | 85 | 60 | 70 | 75 | 75 | 75 | 70 |

*) Foams broken remarkably

- 32 -

## Table 5

| Experiment No. | | 48 | 49 | 50 | 51 | 52 | 53 | 54 | 55 | 56 | 57 |
|---|---|---|---|---|---|---|---|---|---|---|---|
| Cell-uniformizing agent (parts) | | Talc (3) | Talc (0.05) | Talc (1.0) | Talc (5.0) | CM (0.5) | CaCO$_3$ (5) | CaCO$_3$ (10) | Talc (1) | Talc (3) | Talc (5) |
| Foam-conditioning resin (parts) | | E-1 (10) | E-1 (3) | S-1 (5) | S-1 (10) E-1 (10) | S-1 (28) | E-1 (25) | E-1 (10) | E-1 (3) | E-2 (5) | E-2 (5) |
| Gaseous blowing agent | Composition (weight ratio) | TCFM + MNC (70/30) | DCFM +MNC (50/50) | DCFM + MNC (50/50) | DCFM + MNC (50/50) | BN + MC (50/50) | DCFM (90/10) | TCFM + CF (70/20/10) | ISO (100) | TCFE + TN (80/20) | TCFE + ISO (50/50) |
| | Amount introduced, % by weight | 12 | 8 | 10 | 14 | 14 | 14 | 15 | 10 | 10 | 10 |
| Bulk density of foamed body, g/ml | | 0.029 | 0.043 | 0.033 | 0.025 | 0.026 | 0.029 | 0.025 | 0.12 | 0.11 | 0.14 |
| Cellular structure | | A | B | A | A | A | A | A | C | C | C |
| Content of closed cells, % | | 91 | 90 | 93 | 90 | 96 | 90 | 92 | 30 | 21 | 13 |
| Temperature of heat resistance,°C | | 85 | 90 | 90 | 90 | 80 | 80 | 85 | 80 | 80 | 80 |
| Foam shrinkage at extrusion | | No | No | No | No | No | No | No | Yes | Yes | Yes |

## T a b l e    6

| Experiment No. | 58 | 59 | 60 | 61 | 62 | 63 | 64 | 65 | 66 | 67 | 68 | 69*) |
|---|---|---|---|---|---|---|---|---|---|---|---|---|
| Foam-condition-ing resin (parts) | E-3 (15) | E-4 (10) | E-5 (3) | E-6 (10) | S-3 (15) | S-4 (10) | S-5 (2) E-6 (2) | S-5 (5) E-3 (5) | E-3 (5) | S-3 (5) | E-4 (0.5) | S-4 (5) |
| Temperature of second-stage cylinder, °C $T_1$ | 140 | 140 | 135 | 135 | 136 | 140 | 140 | 140 | 150 | 150 | 145 | 120 |
| $T_2$ | 120 | 120 | 120 | 120 | 120 | 125 | 125 | 128 | 140 | 140 | 135 | 110 |
| $T_3$ | 110 | 110 | 110 | 115 | 112 | 115 | 115 | 120 | 135 | 135 | 130 | 100 |
| Die temperature $D_1$, °C | 129 | 128 | 128 | 130 | 130 | 129 | 130 | 129 | 140 | 130 | 135 | 120 |
| Resin temperature $T_4$, °C | 134 | 133 | 133 | 137 | 135 | 138 | 137 | 140 | 149 | 148 | 144 | 120 |
| Bulk density of Foamed body, g/ml | 0.028 | 0.027 | 0.026 | 0.029 | 0.028 | 0.027 | 0.029 | 0.027 | 0.083 | 0.088 | 0.091 | 0.087 |
| Cellular structure | A | A | A | A | A | A | A | A | B | B | B | B |
| Content of closed cells, % | 93 | 95 | 90 | 97 | 96 | 95 | 90 | 91 | 12 | 15 | 23 | 30 |
| Temperature of heat resistance, °C | 80 | 80 | 85 | 80 | 80 | 85 | 85 | 85 | 85 | 85 | 85 | 80 |

*) Large torque at the second-stage extruder

WHAT IS CLAIMED IS:

1.   A foamed body of a chlorine-containing synthetic plastic resin having a cellular structure formed of a resin composition comprising:

(a) 100 parts by weight of a chlorinated polyvinyl chloride resin containing from 60 to 75 % by weight of chlorine or a resin mixture thereof with a polyvinyl chloride resin in an amount not exceeding 90 % by weight of the resin mixture, and

(b) from 0.5 to 30 parts by weight of a foam conditioning resin selected from the group consisting of acrylic resins and styrene-based resins.

2.   A method for the preparation of a foamed body of a chlorine-containing synthetic plastic resin having a cellular structure which comprises the steps of:

(i) preparing a resin composition comprising

(a) 100 parts by weight of a chlorinated polyvinyl chloride resin containing from 60 to 75 % by weight of chlorine or a resin mixture thereof with a polyvinyl chloride resin in an amount not exceeding 90 % by weight of the resin mixture,

(b) from 0.5 to 30 parts by weight of a foam conditioning resin selected from the group consisting of acrylic resins and styrene-based resins, and

(c) at least 0.01 part by weight of a cell uniformizing agent selected from the group consisting of heat-decomposable blowing agents and high-melting finely divided powders;

(ii) supplying the resin composition to an extruder machine;

(iii) impregnating and admixing the resin composition in the extruder machine under pressurization with a volatilizable organic blowing agent boiling at 90 °C or below under atmospheric pressure, and

(iv) extruding and shaping the resin composition out of the extruder machine with simultaneous expansion by foaming.

3. The method as claimed in claim 2 wherein the component (a) is a mixture of from 10 % to 90 % by weight of a chlorinated polyvinyl chloride resin and from 90 % to 10 % by weight of a polyvinyl chloride resin.

4. The method as claimed in claim 2 wherein the foam conditioning resin has a reduced viscosity of at least 3.0 dl/g at 20 °C as measured in a chloroform solution of a concentration of 0.1 g/100 ml.

5. The method as claimed in claim 2 wherein the cell uniformizing agent has a particle diameter not exceeding 30 $\mu$m as dispersed in the resin composition.

6. The method as claimed in claim 2 wherein the amount of the volatilizable organic blowing agent is in the range from 1 to 30 parts by weight per 100 parts by weight of the resin composition.